# EUROPEAN PATENT APPLICATION

(11) **EP 4 538 093 A1**
(43) Date of publication of application: **16.04.2025**
(21) Application number: 23203154.2
(22) Date of filing: 12.10.2023
(51) Int. Cl.: B60L 3/00, B60L 3/04, B60L 58/30, B60L 58/31, H01M 8/04

(54) **A SHORT CIRCUIT DIAGNOSTIC METHOD FOR A VEHICLE FUEL CELL SYSTEM AND A VEHICLE FUEL CELL SYSTEM**

(71) Applicant: VOLVO TRUCK CORPORATION, 405 08 Göteborg (SE)
(72) Inventor: ARYA, Pranav, 412 85 GÖTEBORG (SE); CACIC, Toni, 422 41 HISINGS BACKA (SE); BLANC, Ricard, 431 68 MÖLNDAL (SE)
(74) Representative: Ström & Gulliksson AB

(57) **Abstract**

A short circuit diagnostic method (100) for a vehicle fuel cell system (1), the method comprising supplying (110, 120) a first electric voltage (Vm) to a first electric input (12) and a second electric voltage (Vs) to a second electric input (14), the second electric voltage (Vs) being different from the first electric voltage (Vm), measuring (130) a voltage difference (Vd) between the first electric input (12) and the second electric input (14), comparing (140) the voltage difference (Vd) with a threshold voltage, and determining (150) that a fuel cell system short circuit is present should the voltage difference (Vd) be below the threshold voltage.

## Description

### TECHNICAL FIELD

The disclosure relates generally to short circuit diagnostic methods. In particular aspects, the disclosure relates to a short circuit diagnostic method for a vehicle fuel cell system and to vehicle fuel cell system. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A vehicle safety function procedure may typically be based on interrupting a power supply to a safety function device. For example, the power supply to a contactor for a high voltage battery or fuel cell system may be interrupted in case of a hazardous situation. A safety function device may be powered by the same power supply as other, non-safety, devices. Interrupting a power supply to a safety function device could thereby entail also interrupting the power supply to non-safety functions, which may be undesirable.

Some vehicle safety function procedures may only be performed during startup of the vehicle, and thus not during operation of the vehicle. For example, power may during startup be supplied to non-safety devices and not to a safety function device. Should in such case it be detected that the safety function device is nevertheless provided with power, the presence of a short circuit may be determined

### SUMMARY

According to a first aspect of the disclosure, there is provided a short circuit diagnostic method for a vehicle fuel cell system. The vehicle fuel cell system comprises a vehicle fuel cell unit comprising a first electric input and a second electric input. The vehicle fuel cell system further comprises an electric supply unit for supplying electric power to the first electric input and the second electric input and a switch arrangement that is arranged to interrupt the electric power to the second electric input if triggered in a hazardous situation such as a crash. The method comprises supplying a first electric voltage to the first electric input and a second electric voltage to the second electric input, the second electric voltage being different from the first electric voltage, measuring a voltage difference between the first electric input and the second electric input, comparing the voltage difference with a threshold voltage, and determining that a fuel cell system short circuit is present should the voltage difference be below the threshold voltage.

The first aspect of the disclosure may seek to provide a vehicle safety function in the form of a short circuit diagnostic method that is available during operation of a vehicle, thus not only at or during startup of the vehicle or more precisely of the vehicle fuel cell unit. A technical benefit may thus include improved safety. The vehicle safety function may be available continuously during operation of the vehicle fuel cell unit. Another advantage may be that the first electric input and the second electric input may power devices at different and respectively suitable voltages. For example, the first electric input may power a control system and the second electric input may power a safety disconnect device. In such a case, the second electric voltage may be lower than the first electric voltage.

Optionally, the switch arrangement is kept closed during an initiation of a drive cycle of the vehicle fuel cell system such that electric power is supplied to the second electric input at the initiation of the drive cycle. Thus, the short circuit diagnostic method is available at the initiation of the drive cycle. Typically, the switch arrangement is kept closed during the entire drive cycle of the vehicle fuel cell system, and is only opened in a hazardous situation such as a crash.

Optionally, the method is performed continuously or intermittently during a drive cycle of the vehicle fuel cell system and not only during an initiation of the drive cycle. The measuring, comparing and determining are typically performed continuously, even though an intermittent operation is conceivable.

Optionally, the first electric input is adapted to power a control system comprising e.g. an actuator and/or a sensor of the vehicle fuel cell unit. As has been mentioned, the method allows for supplying such a control system with a first electric voltage that is different, typically higher, than the second electric voltage.

Optionally, the second electric input is adapted to power a safety disconnect device of the vehicle fuel cell unit. As has been mentioned, the method allows for supplying such a safety disconnect device with a second electric voltage that is different, typically lower, than the first electric voltage.

Optionally, the method comprises generating a safety warning message to an operator of the vehicle fuel cell system, in case a fuel cell system short circuit is determined by the voltage difference being below the threshold voltage. Typically, the operator may be a driver of a vehicle in which the vehicle fuel cell system is arranged. An advantage involves that the operator is informed that the safety system is compromised. The vehicle fuel cell system may continue its operation, but the operator may arrange for expeditious or immediate service. For example, a driver may schedule a vehicle service or may immediately drive the vehicle to a workshop or a service center.

Optionally, the vehicle fuel cell system comprises a controller that is adapted for determining that a fuel cell system short circuit is present should the voltage difference be below the threshold voltage. In such case, the controller may be adapted for generating a safety warning message to an operator of the vehicle fuel cell system. Providing the vehicle fuel cell system with such a controller may ensure high reliability and thus safety. Said controller may be dedicated to determining the presence of a fuel cell system short circuit. Thus, the method may comprise determining that a fuel cell system short circuit is present, and optionally generating the safety warning message, by means of the controller. The present disclosure does not exclude that another controller, such as a vehicle control unit, determines that a fuel cell system short circuit is present should the voltage difference be below the threshold voltage.

Optionally, the method comprises triggering the switch arrangement in case a hazardous situation such as crash is detected, such that the switch arrangement opens to thereby stop electric power from being supplied to the second electric input.

Optionally, the controller is adapted for detecting a hazardous situation such as crash, and in such case, triggering the switch arrangement such that the switch arrangement opens to thereby stop electric power from being is supplied to the second electric input.

Optionally, the short circuit diagnostic method is computer-implemented.

According to a second aspect of the disclosure, there is provided a computer program product comprising program code for performing, when executed by a processor device of a controller, the computer-implemented short circuit diagnostic method.

According to a third aspect of the disclosure, there is provided a non-transitory computer-readable storage medium comprising instructions, which when executed by a processor device of a controller, cause the processing circuitry to perform the computer-implemented short circuit diagnostic method.

According to a fourth aspect of the disclosure, there is provided a vehicle fuel cell system comprising a vehicle fuel cell unit comprising a first electric input and a second electric input; an electric supply unit for supplying electric power to the first electric input and the second electric input; a switch arrangement that may selectively be arranged in a closed position and in an open position, is coupled between the electric supply unit and the second electric input, and in its open position interrupts the electric power supplied to the second electric input; a voltage drop arrangement that is coupled between the electric supply unit and the second electric input and is adapted to create a predefined voltage drop between the first electric input and the second electric input; and a voltage metering arrangement for measuring a voltage difference between the first electric input and the second electric input.

As has been described, such a vehicle fuel cell system may provide a short circuit diagnostic method that is available during operation, and not only at or during startup.

Optionally, the vehicle fuel cell system comprises a controller that is configured to determine that a fuel cell system short circuit is present should the voltage difference be below a threshold voltage. Alternatively, the vehicle fuel cell system is connected to a controller that is configured to determine that a fuel cell system short circuit is present should the voltage difference be below a threshold voltage.

Optionally, the controller is connected to the voltage metering arrangement and is configured to compare the voltage difference with a threshold voltage and determine that a fuel cell system short circuit is present should the voltage difference be below the threshold voltage. The controller is typically not connected to the switch arrangement. Instead, there is typically a hazardous situation detection function that is connected to and adapted to operate the switch arrangement. However, the present disclosure does not exclude the controller being connected to the switch arrangement.

Optionally, the controller is configured to generate a safety warning message to an operator of the vehicle fuel cell system in case a fuel cell system short circuit is determined by the controller.

Optionally, the vehicle fuel cell system comprises a control system for controlling the vehicle fuel cell system. For example, the control system may comprise an actuator and/or a sensor. The control system may be connected to the first electric input. Thus, the control system may be powered via the first electric input. The first electric input may therefore be referred to as a control system input or a main input. As a result of the voltage drop arrangement, a first electric voltage may be supplied to the first electric input and a second, different, electric voltage may be supplied to the second electric input.

Optionally, the vehicle fuel cell system comprises a safety disconnect device. For example, the safety disconnect device may comprise or consist of a high voltage contactor. The safety disconnect device be connected to the second electric input. Thus, the safety disconnect device may be powered via the second electric input. The second electric input may therefore be referred to as a safety function input. Again, as a result of the voltage drop arrangement, a first electric voltage may be supplied to the first electric input and a second, different, electric voltage may be supplied to the second electric input. Typically, the second electric voltage may by lower than the first electric voltage.

Optionally, the safety disconnect device is adapted to cause the vehicle fuel cell unit to shut down if the safety disconnect device is not supplied with electric power from the second electric input. If the switch arrangement is arranged in the open position, the safety disconnect device may shut down the vehicle fuel cell unit.

Optionally, the voltage drop arrangement comprises a diode or a resistor, to reliably provide the voltage drop. A diode, or in practice several diodes, may entail the advantage of lower power consumption, as compared to one or several resistors. Another advantage of a diode may be that the voltage drop may be essentially constant with the current.

Optionally, the switch arrangement comprises an electro-mechanical relay, a pyro switch, a pyro fuse or a solid-state relay.

Optionally, the electric supply unit is a low voltage electric supply unit. The electric supply unit may be a battery, or a low voltage supply that comprises a power electronic converter. Such a converter may be powered by a high voltage battery of the vehicle. For example, the electric supply unit may be a 12V or a 24V battery.

Optionally, the vehicle fuel cell system is configured such that the switch arrangement may be in its closed position at an initiation of a drive cycle of vehicle fuel cell system such that electric power may be supplied to the second electric input at the initiation of the drive cycle.

Optionally, the safety disconnect device is adapted to cause the vehicle fuel cell unit to shut down if the safety disconnect device not supplied with electric power from the second electric input.

According to a fifth aspect of the disclosure, there is provided a vehicle that comprises the vehicle fuel cell system. The vehicle may be a heavy-duty vehicle such as a truck or a bus. A fuel cell system may be particularly useful in a heavy-duty vehicle to meet its energy demand, as pure battery electric heavy-duty vehicles tend to require very large and heavy high voltage batteries. Typically, a heavy-duty vehicle according to the present disclosure comprises a fuel cell system and a high voltage battery.

Advantages and further possible features of the second to fifth aspects correspond to those of the first aspect, and will not be repeated herein.

It is conceivable that the concept of the present disclosure may be applicable to other vehicle subsystems than fuel cells, such as an energy storage system, an emergency signal system or an electric machine. According to a general aspect of the disclosure, there is provided a short circuit diagnostic method for a vehicle subsystem. The vehicle subsystem comprises a vehicle subunit comprising a first electric input and a second electric input. The vehicle subsystem further comprises an electric supply unit for supplying electric power to the first electric input and the second electric input and a switch arrangement that is arranged to interrupt the electric power to the second electric input if triggered in a hazardous situation such as a crash. The method comprises supplying a first electric voltage to the first electric input and a second electric voltage to the second electric input, the second electric voltage being different from the first electric voltage, measuring a voltage difference between the first electric input and the second electric input, comparing the voltage difference with a threshold voltage, and determining that a subsystem short circuit is present should the voltage difference be below the threshold voltage. Also, there are provided a corresponding computer program product, non-transitory computer-readable storage medium, vehicle subsystem and vehicle (comprising the vehicle subsystem). Advantages and further possible features of the general aspect correspond to those of the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a schematic view of a vehicle fuel cell system that includes a controller.
**FIG. 2** illustrates a short circuit diagnostic method.
**FIG. 3** is a schematic diagram of an exemplary computer system for implementing examples disclosed herein, according to one example.

### DETAILED DESCRIPTION

The detailed description set forth below provides information and examples of the disclosed technology with sufficient detail to enable those skilled in the art to practice the disclosure.

One problem addressed in the present disclosure is how to perform a short circuit diagnostic for a safety function that operates by its power supply being interrupted, if the safety function is powered by the same power supply. One inventive concept of the present disclosure solves this problem i.a. by supplying a first and a second input with different voltages, and monitoring a voltage difference.

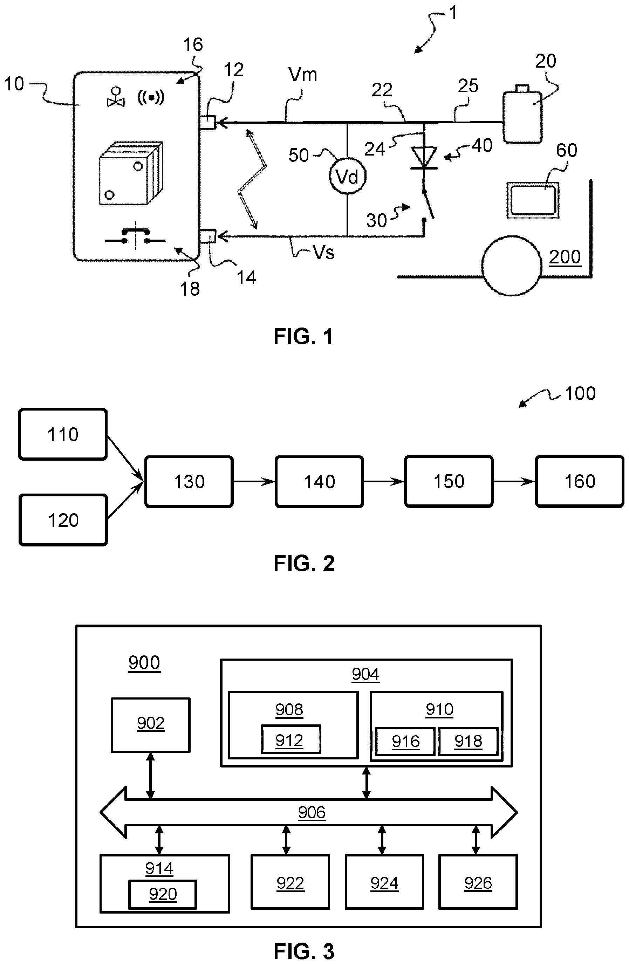

**FIG. 1** is an exemplary view of vehicle fuel cell system 1 and schematically illustrates a vehicle 200 in which the vehicle fuel cell system 1 is arranged. The vehicle 200 may be a heavy-duty vehicle such as a truck or a bus. **FIG. 2** illustrates a short circuit diagnostic method 100 applicable e.g. to the vehicle fuel cell system 1 of **FIG. 1****.**

The vehicle fuel cell system 1 of **FIG. 1** comprises a vehicle fuel cell unit 10 having a schematically illustrated fuel cell stack with bipolar plates, a first electric input 12 and a second electric input 14. Also schematically illustrated are an actuator and a sensor of a control system 16, as well as a safety disconnect device 18.

As is known to persons skilled in the art, the fuel cell stack typically comprises an input and an output for cathode gas (typically air) and an input and an output for anode gas (such as hydrogen). Further, a fuel cell system typically comprises a cooling circuit, a compressor for the cathode gas and a tank for the anode gas. The fuel cell unit per se is not described in further detail in the present disclosure.

Referring again to **FIG. 1****,** the present vehicle fuel cell system 1 comprises an electric supply unit 20 for supplying electric power to the first electric input 12 and the second electric input 14. Thus, the electric supply unit 20 powers both the first electric input 12 and the second electric input 14. In the present example, the electric supply unit 20 is illustrated as a battery, but a power electronic converter connected to a high voltage battery is also conceivable.

As is illustrated, there may be one single electrical supply line or electric connection 25 leading from the electric supply unit 20 to the first electric input 12 and to the second electric input 14. In some detail, one single electric connection 25 may, as illustrated, lead from the electric supply unit 20, and the electric connection may be divided or split into one first electric connection 22 to the first electric input 12 and one second electric connection 24 to the second electric input 14.

The present vehicle fuel cell system 1 further comprises a switch arrangement 30 that may selectively be arranged in a closed position and in an open position (as in **FIG. 1**). In the present example, the switch arrangement 30 is coupled between the electric supply unit 20 and the second electric input 14, and in its open position the switch arrangement 30 interrupts the electric power supplied to the second electric input 14. Thus, the switch arrangement 30 is arranged to interrupt the electric power to the second electric input 14 if triggered in a hazardous situation such as a crash. For example, the switch arrangement 30 may be triggered by a separate undepicted function for detection of hazardous situations.

In some more detail, in the present example the switch arrangement 30 is arranged or coupled in the second electric connection 24 that leads to the second electric input 14, downstream the division or split from the one single electric connection 25.

The present vehicle fuel cell system 1 further comprises a voltage drop arrangement 40 that is coupled between the electric supply unit 20 and the second electric input 14 and is adapted to create a predefined voltage drop between the first electric input 12 and the second electric input 14. Thus, by means of the voltage drop arrangement 40, a first electric voltage Vm is supplied to the first electric input 12 and a second electric voltage Vs is supplied to the second electric input 14.

In some more detail, in the present example the voltage drop arrangement 40 is arranged or coupled in the second electric connection 24 that leads to the second electric input 14, downstream the division or split from the one single electric connection 25. The voltage drop arrangement 40 may be positioned upstream the switch arrangement 30, as is illustrated. Thus, the voltage drop arrangement 40 and the switch arrangement 30 may be arranged or coupled in series. In the current example, the voltage drop arrangement 40 is illustrated as a diode but typically comprises a plurality of diodes, and/or resistors.

Still referring to **FIG. 1****,** the present vehicle fuel cell system 1 further comprises a voltage monitoring or metering arrangement 50 for measuring a voltage difference Vd between the first electric input 12 and the second electric input 14.

The vehicle fuel cell system 1 as illustrated in **FIG. 1** is thus adapted to supply the first electric voltage Vm to the first electric input 12 and the second electric voltage Vs to the second electric input 14, and to measure the voltage difference Vd between the first electric input 12 and the second electric input 14.

Further, the vehicle fuel cell system 1 may be adapted to compare the voltage difference Vd with a threshold voltage and determine that a fuel cell system short circuit is present should the voltage difference Vd be below the threshold voltage. These functions may be performed by a controller 60 (**FIG. 1**) of the vehicle fuel cell system 1, or by another undepicted controller, such as a vehicle control unit or similar, that is connected to the voltage metering arrangement 50. It is to be apprehended that the herein described functions of the controller 60 may alternatively be performed by a vehicle control unit or similar.

The controller 60 of the vehicle fuel cell system 1 may comprise or be connected to a memory in which threshold voltage data is stored.

A short circuit between the first electric input 12 and the second electric input 14 is schematically illustrated in **FIG. 1****.** It is to be apprehended that the short circuit typically, but not necessary, occurs on or in the fuel cell unit 10. A short circuit between the first and second electric inputs 12, 14 will reduce or typically eliminate the voltage difference Vd between the first and second electric inputs 12, 14.

It is to apprehend that, depending on how the threshold voltage is selected, the disclosed technology may detect not only a dead short circuit, but also a partial short circuit.

Should a short circuit be determined by the controller 60, the controller 60 may generate a safety warning message to an operator of the vehicle fuel cell system 1. Therefore, the controller 60 may be connected to a display system or to a vehicle control unit, such that the operator may be notified.

The safety disconnect device 18, which is illustrated in **FIG. 1****,** may be adapted to cause the vehicle fuel cell unit 10 to shut down when not supplied with electric power from the second electric input 14. Thus, when the switch arrangement 30 changes from its closed position to its open position, the safety disconnect device 18 may cause the vehicle fuel cell unit 10 to shut down.

Referring **FIG. 2****,** the present method 100 comprises supplying 110 a first electric voltage Vm to the first electric input 12. The first electric voltage Vm may be referred to as a control system voltage or main voltage. The method 100 further comprises supplying 120 a second electric voltage Vs to the second electric input 14. The second electric voltage Vs may be referred to as a safety function voltage. As had been described, the second electric voltage Vs is different from the first electric voltage Vm. In other words, the magnitude of the first and second voltages Vm, Vs differ. The method 100 further comprises measuring 130 a voltage difference Vd between the first electric input 12 and the second electric input 14, comparing 140 the voltage difference Vd with a threshold voltage, and determining 150 that a fuel cell system short circuit is present should the voltage difference Vd be below the threshold voltage.

The switch arrangement 30 may in accordance with the present disclosure be kept closed during an initiation of a drive cycle of the vehicle fuel cell system 1 such that electric power is supplied to the second electric input 14 at the initiation of the drive cycle. To the contrary, some prior art safety function procedures may only be performed during an initiation of a drive cycle, and not during operation.

In other words, the present method 100 may be performed continuously or intermittently during a drive cycle of the vehicle fuel cell system 1 and not only during an initiation of the drive cycle.

The present method 100 is typically computer-implemented. **FIG. 3** is a schematic diagram of a computer system 900 for implementing examples disclosed herein. The computer system 900 is adapted to execute instructions from a computer-readable medium to perform these and/or any of the functions or processing described herein. The computer system **900** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **900** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 900 may comprise at least one computing device or electronic device capable of including firmware, hardware, and/or executing software instructions to implement the functionality described herein. The computer system 900 may include processing circuitry 902 (e.g., processing circuitry including one or more processor devices or control units), a memory 904, and a system bus 906. The computer system 900 may include at least one computing device having the processing circuitry 902. The system bus 906 provides an interface for system components including, but not limited to, the memory 904 and the processing circuitry 902. The processing circuitry 902 may include any number of hardware components for conducting data or signal processing or for executing computer code stored in memory 904. The processing circuitry 902 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 902 may further include computer executable code that controls operation of the programmable device.

The system bus 906 may be any of several types of bus structures that may further interconnect to a memory bus (with or without a memory controller), a peripheral bus, and/or a local bus using any of a variety of bus architectures. The memory 904 may be one or more devices for storing data and/or computer code for completing or facilitating methods described herein. The memory 904 may include database components, object code components, script components, or other types of information structure for supporting the various activities herein. Any distributed or local memory device may be utilized with the systems and methods of this description. The memory 904 may be communicably connected to the processing circuitry 902 (e.g., via a circuit or any other wired, wireless, or network connection) and may include computer code for executing one or more processes described herein. The memory 904 may include non-volatile memory 908 (e.g., read-only memory (ROM), erasable programmable read-only memory (EPROM), electrically erasable programmable read-only memory (EEPROM), etc.), and volatile memory 910 (e.g., random-access memory (RAM)), or any other medium which can be used to carry or store desired program code in the form of machine-executable instructions or data structures and which can be accessed by a computer or other machine with processing circuitry 902. A basic input/output system (BIOS) 912 may be stored in the non-volatile memory 908 and can include the basic routines that help to transfer information between elements within the computer system 900.

The computer system 900 may further include or be coupled to a non-transitory computer-readable storage medium such as a storage device 914, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 914 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 914 and/or in the volatile memory 910, which may include an operating system 916 and/or one or more program modules 918. All or a portion of the examples disclosed herein may be implemented as a computer program 920 stored on a transitory or non-transitory computer-usable or computer-readable storage medium (e.g., single medium or multiple media), such as the storage device 914, which includes complex programming instructions (e.g., complex computer-readable program code) to cause the processing circuitry 902 to carry out actions described herein. Thus, the computer-readable program code of the computer program 920 can comprise software instructions for implementing the functionality of the examples described herein when executed by the processing circuitry 902. In some examples, the storage device 914 may be a computer program product (e.g., readable storage medium) storing the computer program 920 thereon, where at least a portion of a computer program 920 may be loadable (e.g., into a processor) for implementing the functionality of the examples described herein when executed by the processing circuitry 902. The processing circuitry 902 may serve as a controller or control system for the computer system 900 that is to implement the functionality described herein.

The computer system 900 may include an input device interface 922 configured to receive input and selections to be communicated to the computer system 900 when executing instructions, such as from a keyboard, mouse, touch-sensitive surface, etc. Such input devices may be connected to the processing circuitry 902 through the input device interface 922 coupled to the system bus 906 but can be connected through other interfaces, such as a parallel port, an Institute of Electrical and Electronic Engineers (IEEE) 1394 serial port, a Universal Serial Bus (USB) port, an IR interface, and the like. The computer system 900 may include an output device interface 924 configured to forward output, such as to a display, a video display unit (e.g., a liquid crystal display (LCD) or a cathode ray tube (CRT)). The computer system 900 may include a communications interface 926 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Also disclosed are examples according to the following clauses:
1. A short circuit diagnostic method (100) for a vehicle fuel cell system (1) that comprises
   - a vehicle fuel cell unit (10) comprising a first electric input (12) and a second electric input (14),
   - an electric supply unit (20) for supplying electric power to the first electric input (12) and the second electric input (14), and
   - a switch arrangement (30) that is arranged to interrupt the electric power to the second electric input (14) if triggered in a hazardous situation such as a crash,
   the method comprising
   - supplying (110, 120) a first electric voltage (Vm) to the first electric input (12) and a second electric voltage (Vs) to the second electric input (14), the second electric voltage (Vs) being different from the first electric voltage (Vm),
   - measuring (130) a voltage difference (Vd) between the first electric input (12) and the second electric input (14),
   - comparing (140) the voltage difference (Vd) with a threshold voltage, and
   - determining (150) that a fuel cell system short circuit is present should the voltage difference (Vd) be below the threshold voltage.
2. The short circuit diagnostic method (100) of clause 1, wherein the switch arrangement (30) is kept closed during an initiation of a drive cycle of the vehicle fuel cell system (1) such that electric power is supplied to the second electric input (14) at the initiation of the drive cycle.
3. The short circuit diagnostic method (100) of clause 1 or 2, wherein the method (100) is performed continuously or intermittently during a drive cycle of the vehicle fuel cell system (1) and not only during an initiation of the drive cycle.
4. The short circuit diagnostic method (100) of any preceding clause, wherein the first electric input (12) is adapted to power a control system (16) comprising e.g. an actuator and/or a sensor of the vehicle fuel cell unit (10).
5. The short circuit diagnostic method (100) of any preceding clause, wherein the second electric input (14) is adapted to power a safety disconnect device (18) of the vehicle fuel cell unit (10).
6. The short circuit diagnostic method (100) of any preceding clause, comprising generating (160) a safety warning message to an operator of the vehicle fuel cell system (1), in case a fuel cell system short circuit is determined by the voltage difference (Vd) being below the threshold voltage.
7. The short circuit diagnostic method (100) of any preceding clause, wherein the vehicle fuel cell system (1) comprises a controller (60) that is adapted for determining (150) that a fuel cell system short circuit is present should the voltage difference (Vd) be below the threshold voltage, and in such case, generating (160) a safety warning message to an operator of the vehicle fuel cell system (1).
8. The short circuit diagnostic method (100) of any preceding clause, wherein the method is computer-implemented.
9. A computer program product comprising program code for performing, when executed by a processor device of a controller (60), the computer-implemented short circuit diagnostic method (100) of clause 8.
10. A non-transitory computer-readable storage medium comprising instructions, which when executed by a processor device of a controller (60), cause the processing circuitry to perform the computer-implemented short circuit diagnostic method (100) of clause 8.
11. A vehicle fuel cell system (1) comprising
   - a vehicle fuel cell unit (10) comprising a first electric input (12) and a second electric input (14),
   - an electric supply unit (20) for supplying electric power to the first electric input (12) and the second electric input (14),
   - a switch arrangement (30) that may selectively be arranged in a closed position and in an open position, is coupled between the electric supply unit (20) and the second electric input (14), and in its open position interrupts the electric power supplied to the second electric input (14),
   - a voltage drop arrangement (40) that is coupled between the electric supply unit (20) and the second electric input (14) and is adapted to create a predefined voltage drop between the first electric input (12) and the second electric input (14), and
   - a voltage metering arrangement (50) for measuring a voltage difference (Vd) between the first electric input (12) and the second electric input (14).
12. The vehicle fuel cell system (1) of clause 11, comprising or connected to a controller (60) that is configured to determine that a fuel cell system short circuit is present should the voltage difference (Vd) be below a threshold voltage.
13. The vehicle fuel cell system (1) of clause 12, wherein the controller (60) is connected to the voltage metering arrangement (50) and is configured to compare the voltage difference (Vd) with a threshold voltage and determine that a fuel cell system short circuit is present should the voltage difference (Vd) be below the threshold voltage.
14. The vehicle fuel cell system (1) according to clause 12 or 13, wherein the controller (60) is configured to generate a safety warning message to an operator of the vehicle fuel cell system (1) in case a fuel cell system short circuit is determined by the controller (60).
15. The vehicle fuel cell system (1) according to any of clauses 11 to 14, comprising a control system (16) comprising e.g. an actuator and/or a sensor, the control system (16) being connected to the first electric input (12).
16. The vehicle fuel cell system (1) according to any of clauses 11 to 15, comprising a safety disconnect device (18) that is connected to the second electric input (14).
17. The vehicle fuel cell system (1) of clause 16, wherein the safety disconnect device (18) is adapted to cause the vehicle fuel cell unit (10) to shut down if the safety disconnect device (18) is not supplied with electric power from the second electric input (14).
18. The vehicle fuel cell system (1) according to any of clauses 11 to 17, wherein the voltage drop arrangement (40) comprises a diode or a resistor.
19. The vehicle fuel cell system (1) according to any of clauses 11 to 18, wherein the switch arrangement (30) comprises an electro-mechanical relay, a pyro switch, a pyro fuse or a solid-state relay.
20. The vehicle fuel cell system (1) according to any of clauses 11 to 19, wherein the electric supply unit (20) is a low voltage battery, such as a 12V or a 24V battery, or a low voltage supply that comprises a power electronic converter.
21. A vehicle (200) comprising the vehicle fuel cell system (1) according to any one of clauses 11 to 20.
22. The vehicle (200) of clause 21, wherein the vehicle is a heavy-duty vehicle such as a truck or a bus.
23. A short circuit diagnostic method (100) for a vehicle subsystem (1) that comprises
   - a vehicle subunit (10) comprising a first electric input (12) and a second electric input (14),
   - an electric supply unit (20) for supplying electric power to the first electric input (12) and the second electric input (14), and
   - a switch arrangement (30) that is arranged to interrupt the electric power to the second electric input (14) if triggered in a hazardous situation such as a crash,
   the method comprising
   - supplying (110, 120) a first electric voltage (Vm) to the first electric input (12) and a second electric voltage (Vs) to the second electric input (14), the second electric voltage (Vs) being different from the first electric voltage (Vm),
   - measuring (130) a voltage difference (Vd) between the first electric input (12) and the second electric input (14),
   - comparing (140) the voltage difference (Vd) with a threshold voltage, and
   - determining (150) that a subsystem short circuit is present should the voltage difference (Vd) be below the threshold voltage.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A short circuit diagnostic method (100) for a vehicle fuel cell system (1) that comprises
- a vehicle fuel cell unit (10) comprising a first electric input (12) and a second electric input (14),
- an electric supply unit (20) for supplying electric power to the first electric input (12) and the second electric input (14), and
- a switch arrangement (30) that is arranged to interrupt the electric power to the second electric input (14) if triggered in a hazardous situation such as a crash,
the method comprising
- supplying (110, 120) a first electric voltage (Vm) to the first electric input (12) and a second electric voltage (Vs) to the second electric input (14), the second electric voltage (Vs) being different from the first electric voltage (Vm),
- measuring (130) a voltage difference (Vd) between the first electric input (12) and the second electric input (14),
- comparing (140) the voltage difference (Vd) with a threshold voltage, and
- determining (150) that a fuel cell system short circuit is present should the voltage difference (Vd) be below the threshold voltage.

2. The short circuit diagnostic method (100) of claim 1, wherein the switch arrangement (30) is kept closed during an initiation of a drive cycle of the vehicle fuel cell system (1) such that electric power is supplied to the second electric input (14) at the initiation of the drive cycle.

3. The short circuit diagnostic method (100) of claim 1 or 2, comprising generating (160) a safety warning message to an operator of the vehicle fuel cell system (1), in case a fuel cell system short circuit is determined by the voltage difference (Vd) being below the threshold voltage.

4. The short circuit diagnostic method (100) of any preceding claim, wherein the method is computer-implemented.

5. A computer program product comprising program code for performing, when executed by a processor device of a controller (60), the computer-implemented short circuit diagnostic method (100) of claim 4.

6. A non-transitory computer-readable storage medium comprising instructions, which when executed by a processor device of a controller (60), cause the processing circuitry to perform the computer-implemented short circuit diagnostic method (100) of claim 4.

7. A vehicle fuel cell system (1) comprising
- a vehicle fuel cell unit (10) comprising a first electric input (12) and a second electric input (14),
- an electric supply unit (20) for supplying electric power to the first electric input (12) and the second electric input (14),
- a switch arrangement (30) that may selectively be arranged in a closed position and in an open position, is coupled between the electric supply unit (20) and the second electric input (14), and in its open position interrupts the electric power supplied to the second electric input (14),
- a voltage drop arrangement (40) that is coupled between the electric supply unit (20) and the second electric input (14) and is adapted to create a predefined voltage drop between the first electric input (12) and the second electric input (14), and
- a voltage metering arrangement (50) for measuring a voltage difference (Vd) between the first electric input (12) and the second electric input (14).

8. The vehicle fuel cell system (1) of claim 7, comprising or connected to a controller (60) that is configured to determine that a fuel cell system short circuit is present should the voltage difference (Vd) be below a threshold voltage.

9. The vehicle fuel cell system (1) of claim 8, wherein the controller (60) is connected to the voltage metering arrangement (50) and is configured to compare the voltage difference (Vd) with a threshold voltage and determine that a fuel cell system short circuit is present should the voltage difference (Vd) be below the threshold voltage.

10. The vehicle fuel cell system (1) of claim 8 or 9, wherein the controller (60) is configured to generate a safety warning message to an operator of the vehicle fuel cell system (1) in case a fuel cell system short circuit is determined by the controller (60).

11. The vehicle fuel cell system (1) according to any of claims 7 to 10, comprising a control system (16) comprising e.g. an actuator and/or a sensor, the control system (16) being connected to the first electric input (12).

12. The vehicle fuel cell system (1) according to any of claims 7 to 11, comprising a safety disconnect device (18) that is connected to the second electric input (14).

13. The vehicle fuel cell system (1) of claim 12, wherein the safety disconnect device (18) is adapted to cause the vehicle fuel cell unit (10) to shut down if the safety disconnect device (18) is not supplied with electric power from the second electric input (14).

14. A vehicle (200) comprising the vehicle fuel cell system (1) according to any one of claims 7 to 13.

15. The vehicle (200) of claim 14, wherein the vehicle is a heavy-duty vehicle such as a truck or a bus.
